# DEMANDE DE BREVET EUROPEEN

(11) **EP 4 360 947 A1**
(43) Date de publication de la demande: **01.05.2024**
(21) Numéro de dépôt: 23204365.3
(22) Date de dépôt: 18.10.2023
(51) Int. Cl.: B60N 2/22

(54) **DOSSIER DE SIÈGE DE VÉHICULE**

(30) Priorité: 27.10.2022 FR 2211224
(71) Demandeur: FAURECIA Sièges d'Automobile, 92000 Nanterre (FR)
(72) Inventeur: JUDIC, Jean-Marc, 78470 SAINT REMY LES CHEVREUSE (FR); MAZZAMURRO, Frédéric, 45800 SAINT JEAN DE BRAYE (FR); CAMUS, Fabrice, 91220 BRÉTIGNY SUR ORGE (FR)
(74) Mandataire: Plasseraud IP

(57) **Abrégé**

La présente divulgation est relative à un dossier (11) pour siège (10) de véhicule comprenant une armature de dossier et un dispositif de réglage de haut de dossier comprenant :
- un organe d'appui (20)) destiné à recevoir en appui sur une face avant le haut du dos d'un occupant du siège, monté pivotant sur l'armature de dossier ;
- au moins une première bielle (30) articulée pivotante par rapport à l'armature de dossier (11) ;
- une pièce intermédiaire (40) entre l'organe d'appui (20) et la première bielle (30), articulée pivotante par rapport à l'organe d'appui et par rapport à la première bielle (30),
- un actionneur pour régler la position de l'organe d'appui (20) entre une position reculée et une position avancée, l'actionneur comprenant une pièce de liaison (50) articulée pivotante par rapport à la pièce intermédiaire (40).

## Description

### Domaine technique

La présente description se rapporte à un dossier de siège de véhicule. La présente description se rapporte également à un siège de véhicule comprenant un tel dossier.

### Technique antérieure

Pour améliorer le confort de l'occupant d'un siège de véhicule 10, en particulier de véhicule automobile, le siège 10 peut présenter plusieurs réglages permettant d'être mieux adapté à la morphologie de l'occupant. Ainsi, la position du siège 10 peut être réglée par rapport au volant, en fonction de la taille de l'occupant. Le dossier 11 du siège peut être plus ou moins inclinable par rapport à l'assise du siège. Le siège peut encore être équipé d'un appui-tête 15 dont la position en hauteur, par rapport au dossier 11 du siège, peut être réglée par l'occupant.

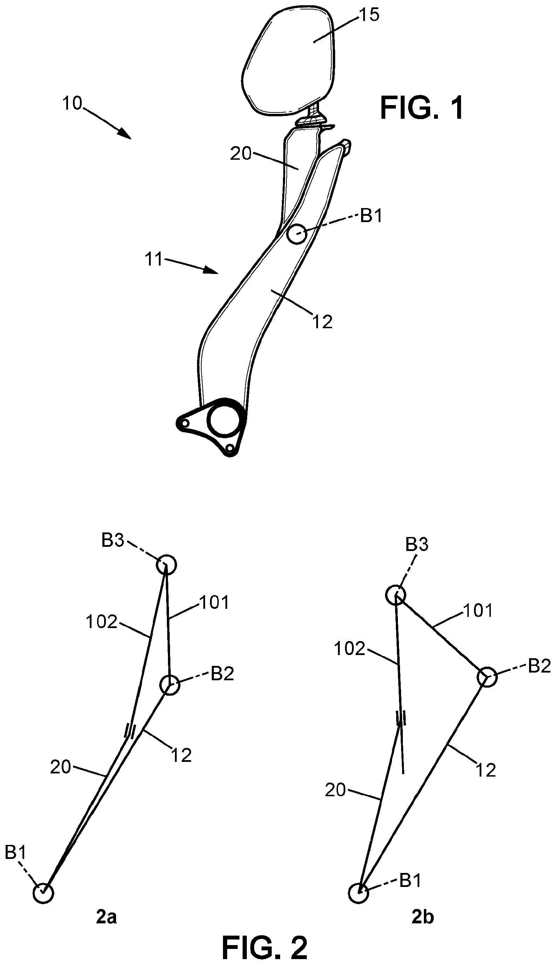

Plus récemment, il est apparu des dispositifs de réglage de haut de dossier 11 de siège de véhicule tels que la position de la zone d'appui du haut du dos de l'occupant sur le haut de dossier 11 est modifiable. Pour ce faire, les dispositifs en question comprennent un organe d'appui 20, pivotant par rapport à une armature de dossier 12 de siège autour d'un premier axe B1 transversal entre position reculée et une position avancée. Dans la position reculée, l'organe d'appui 20 s'étend globalement parallèlement à l'armature de dossier 12, tandis que dans la position avancée, l'organe est pivoté vers l'avant par rapport à l'armature de dossier 12 comme visible à la figure 1.

L'organe d'appui 20 peut être pivoté autour du premier axe B1 transversal manuellement. Cependant, de préférence, le dispositif de réglage de haut de dossier comprend un actionneur, pour commander la rotation de l'organe d'appui 20 autour du premier axe B1 transversal.

Pour ce faire, l'actionneur comporte généralement un moteur fixé au corps de l'organe d'appui 20 et qui entraine une tige 102 en translation selon une direction sensiblement verticale, correspondant à la direction principale d'extension de la vis sans fin.

Le dispositif de réglage de haut de dossier comprend une bielle 101. La bielle 101 est articulée pivotante par rapport à l'armature de dossier 12 autour d'un deuxième axe B2 transversal et par rapport à la tige 102 autour d'un troisième axe B3 transversal.

Le dispositif de réglage de haut de dossier fonctionne alors comme suit. La rotation du moteur provoque un déplacement de la tige 102 vers le haut ou vers le bas. Le déplacement de la tige 102 provoque alors une rotation de la bielle 101 par rapport à la tige 102, autour du troisième axe B3 transversal, d'une part, et/ou par rapport à l'armature de dossier 12, autour du deuxième axe B2 transversal, d'autre part. Finalement, la rotation de la bielle 101 provoque une rotation de l'organe d'appui 20 par rapport à l'armature de dossier 12, autour du premier axe B1 transversal.

Toutefois, il a été constaté par les inventeurs que pour entrainer l'organe d'appui 20 en rotation autour du premier axe B1 vers l'avant (i.e. de la position reculée vers la position avancée), le moteur doit générer un couple beaucoup plus important lorsque l'organe d'appui 20 est au niveau de la position reculée que lorsqu'il est au niveau de la position avancée. De plus, le moteur utilisé doit permettre son intégration dans le dossier 11 du siège 10 et doit donc présenter à cet effet des dimensions réduites. Or, la réduction des dimensions du moteur s'accompagne généralement d'une réduction du couple que celui-ci peut produire. Ainsi, les moteurs pour entrainer l'organe d'appui 20 dont les dimensions conviennent pour être disposés dans le dossier 11 sont généralement dans état de surcharge lorsque l'organe d'appui 20 est au niveau de la position reculée ce qui peut conduire à une usure prématurée des composants électriques et mécaniques du moteur. En outre, le dispositif de réglage de haut de dossier tel que décrit ci-avant présente un degré d'hyperstatisme ce qui rend complexe son assemblage.

Aussi, selon les constatations des inventeurs, une collision peut générer des forces importantes sur la cinématique du dispositif de réglage du haut de dossier et en particulier sur l'actionneur, qui peuvent provoquer un fléchissement de la vis sans fin de l'actionneur en raison du degré d'hyperstatisme. Il a par ailleurs été constaté que lors d'une collision arrière, les efforts transmis à la cinématique et à l'actionneur sont maximaux lorsque l'organe d'appui 20 est en position reculée.

### Résumé

Il est proposé un dossier pour siège de véhicule, le dossier comprenant une armature de dossier et un dispositif de réglage de haut de dossier, le dispositif de réglage de haut de dossier comprenant :
- un organe d'appui comportant un corps destiné à recevoir en appui sur une face avant le haut du dos d'un occupant du siège, l'organe d'appui étant monté pivotant autour d'un premier axe transversal sur l'armature de dossier ;
- au moins une première bielle articulée pivotante par rapport à l'armature de dossier autour d'un deuxième axe transversal;
- une pièce intermédiaire entre l'organe d'appui et la première bielle, la pièce intermédiaire étant articulée pivotante par rapport à l'organe d'appui autour d'un troisième axe transversal et par rapport à la première bielle autour d'un quatrième axe transversal,
- un actionneur pour régler la position de l'organe d'appui autour du premier axe transversal entre une position reculée et une position avancée, l'actionneur comprenant une pièce de liaison articulée pivotante par rapport à la pièce intermédiaire autour d'un cinquième axe transversal, l'actionneur étant adapté pour déplacer la pièce de liaison en translation selon un premier axe perpendiculaire à la direction transversale.

De manière avantageuse, le dispositif de réglage de haut de dossier présente une cinématique qui permet de réduire la variation de l'effort requis par l'actionneur lors de la rotation vers l'avant de l'organe d'appui autour du premier axe transversal entre la position reculée et la position avancée (i.e. de la position reculée vers la position avancée). En particulier, la variation relative maximale observée de l'effort requis par l'actionneur pour entrainer l'organe d'appui en rotation autour du premier axe transversal vers l'avant est inférieure à 20%.

Par ailleurs, la cinématique du dispositif de réglage de haut de dossier permet une réduction de l'effort requis par l'actionneur pour entrainer l'organe d'appui autour du premier axe transversal vers l'avant lorsque celui-ci est au voisinage de la position reculée par rapport aux dispositifs de réglage de haut de dossier connus. Ainsi, le moteur peut présenter des dimensions réduites permettant son intégration dans le dossier tout en limitant, voire en évitant, que celui-ci soit soumis à une charge excessive. Cela permet de préserver le moteur d'une usure prématurée et de conserver un dispositif de réglage de haut de dossier compact.

Aussi, la cinématique du dispositif de réglage de haut de dossier permet une réduction de l'effort maximal transmis à la cinématique et à l'actionneur lors d'une collision. En particulier, il a été mesuré une réduction de l'ordre 40% de l'effort transmis à la cinématique et à l'actionneur lors d'une collision lorsque l'organe d'appui est dans la position reculée. La cinématique du dispositif de réglage de haut de dossier permet en outre une réduction de la variation relative de l'effort transmis à l'actionneur lors d'une collision sur la plage angulaire de rotation de l'organe d'appui autour du premier axe transversal.

L'armature de dossier peut comprendre un premier montant et un second montant. L'armature de dossier peut comprendre au moins une traverse qui s'étend transversalement entre le premier montant et le second montant. La traverse peut être reliée de chaque côté dans la direction transversale respectivement au premier montant et au second montant.

Le corps de l'organe d'appui peut être destiné à être en contact, éventuellement par l'intermédiaire d'une garniture et/ou d'une housse recouvrant au moins partiellement le corps de l'organe d'appui, avec le haut du dos de l'occupant du siège, notamment avec les épaules et/ou les omoplates de l'occupant. Le corps peut présenter une face avant, destinée à être orientée en direction du haut du dos d'un occupant du siège. La face avant peut être plane ou concave. Le corps peut comprendre par ailleurs une face arrière opposée à la face avant. La face arrière peut comprendre des nervures de renfort. Les nervures de renfort forment ici des alvéoles. La rotation de l'organe d'appui autour du premier axe transversal entre une position reculée et une position avancée peut correspondre à une rotation de 15° de l'organe d'appui autour du premier axe transversal.

L'organe d'appui et les montants de l'armature de dossier peuvent comprendre des reliefs associés, notamment par complémentarité de forme, pour guider l'organe d'appui en rotation autour du premier axe transversal, par rapport aux premier montant et deuxième montant de l'armature de dossier. Les reliefs de l'organe d'appui peuvent être saillants transversalement du corps de l'organe d'appui, les reliefs de l'organe d'appui s'étendant de préférence depuis des faces latérales du corps de l'organe d'appui, les reliefs de l'organe d'appui étant chacun reçus respectivement dans un logement du premier montant et un logement du deuxième montant de l'armature de dossier.

L'actionneur peut comprendre un moteur et une vis sans fin s'étendant selon le premier axe perpendiculaire à la direction transversale, la pièce de liaison étant solidaire d'une extrémité de la vis sans fin, le moteur étant adapté pour déplacer la vis sans fin en translation selon la direction du premier axe perpendiculaire à la direction transversale.

Le dispositif de réglage de haut de dossier comprenant un tel actionneur permet une linéarité entre la translation de la vis sans fin selon la direction du premier axe perpendiculaire à la direction transversale et la rotation de l'organe d'appui autour du premier axe transversal. Le réglage de la position de l'organe d'appui autour du premier axe transversal est ainsi plus aisé et plus confortable pour un occupant assis sur le siège. Le moteur peut déplacer la vis sans fin en translation selon le premier axe perpendiculaire à l'axe transversal au moyen d'un engrenage.

Le moteur et la vis sans fin peuvent être articulés pivotant par rapport à l'organe d'appui autour d'un sixième axe transversal. Cela permet de réduire les contraintes d'isostatisme du dispositif de réglage de haut de dossier. Ainsi, le dispositif de réglage de haut de dossier est avantageusement isostatique ce qui en facilite l'assemblage et réduit, voir supprime, les risques de fléchissement de la vis sans fin en cas de collision du véhicule. Le débattement angulaire autour du sixième axe transversal du moteur et la vis sans fin par rapport à l'organe d'appui peut être inférieur ou égal à 4°.

Le deuxième axe transversal, le quatrième axe transversal et le cinquième axe transversal peuvent être sensiblement alignés lorsque l'organe d'appui est dans la position avancée ou au voisinage de la position avancée. Ainsi, lorsqu'un occupant a le haut du dos en appui sur le corps de l'organe d'appui, l'effort induit sur l'organe d'appui est transmis à la première bielle et ensuite à l'armature de dossier au lieu d'être transmis à l'actionneur, ce qui préserve l'actionneur d'une usure prématurée.

Le dispositif de réglage de haut de dossier peut comprendre une seconde bielle articulée pivotante par rapport à l'armature de dossier autour du deuxième axe transversal. La pièce intermédiaire peut comprendre un premier flasque et un second flasque écartés l'un de l'autre dans la direction transversale, le premier flasque étant articulé pivotant par rapport à la première bielle autour du quatrième axe transversal et le second flasque étant articulé pivotant par rapport à la seconde bielle autour du quatrième axe transversal. L'agencement de deux bielles permet de renforcer la structure du dispositif de réglage de haut de dossier en cas de collision du véhicule, notamment cela permet d'éviter un vrillage du dispositif de réglage de haut de dossier.

La pièce intermédiaire peut comprendre un longeron qui s'étend transversalement et reliant le premier flasque et le second flasque l'un à l'autre. Le longeron permet de maintenir l'écartement dans la direction transversale entre le premier flasque et le second flasque.

La première bielle et la seconde bielle peuvent chacune comprendre une première extrémité et une seconde extrémité. La première bielle et la seconde bielle peuvent chacune être articulées pivotantes par rapport à l'armature de dossier au niveau de leur première extrémité. En particulier, la première bielle et la seconde bielle peuvent chacune être articulées pivotantes par rapport une branche respective d'un guide en U qui est solidaire de la traverse.

La première bielle et la seconde bielle peuvent chacune être articulées pivotantes respectivement par rapport au premier flasque et au second flasque au niveau de leur seconde extrémité. À cet effet, le premier flasque et le second flasque peuvent chacun comprendre un premier trou centré sur le quatrième axe transversal et au travers duquel s'étend un organe de pivot.

Le premier flasque et le second flasque peuvent s'étendre chacun perpendiculairement à la direction transversale, le premier flasque et le second flasque ayant chacun une forme sensiblement triangulaire dont les sommets sont respectivement au voisinage du troisième axe transversal, du quatrième axe transversal et du cinquième axe transversal.

Le dispositif de réglage de haut de dossier peut comprendre un premier arbre s'étendant selon le troisième axe transversal, le premier arbre étant solidaire de l'organe d'appui, la pièce intermédiaire étant montée pivotante sur le premier arbre.

Le premier flasque et le second flasque peuvent chacun comprendre un deuxième trou centré sur le troisième axe transversal et au travers duquel s'étend le premier arbre.

L'organe d'appui peut comprendre une première patte et une seconde patte s'étendant chacune depuis la face arrière du corps. Le premier arbre peut s'étendre transversalement depuis la première patte jusqu'à la seconde patte. Le premier arbre peut comprendre une première partie de rétention par rapport à l'organe d'appui dans un premier sens du troisième axe transversal et une seconde partie de rétention par rapport à l'organe d'appui dans un second sens du troisième axe transversal, le second sens étant opposé au premier sens. La première partie de rétention et la seconde partie de rétention peuvent être en appui dans la direction du troisième axe transversal respectivement sur une face de la première patte et une face de la seconde patte qui sont opposées l'une de l'autre selon la direction du troisième axe transversal.

La première patte et la seconde patte peuvent chacune comprendre un trou centré sur le troisième axe transversal à travers duquel s'étend le premier arbre. La seconde partie de rétention peut être élastiquement déformable de sorte à pouvoir être insérée dans le trou de chacune des pattes et le deuxième trou de chaque flasque, et pour coopérer par retour élastique avec la face d'appui de la seconde patte.

Le dispositif de réglage de haut de dossier peut comprendre un second arbre s'étendant selon le cinquième axe transversal, le second arbre étant solidaire de la pièce intermédiaire, la pièce de liaison étant montée pivotante sur le second arbre.

Le premier flasque et le second flasque peuvent chacun comprendre un troisième trou centré sur le cinquième axe transversal et au travers duquel s'étend le second arbre.

Le second arbre peut comprendre une première partie de rétention par rapport à la pièce intermédiaire dans un premier sens du cinquième axe transversal et une seconde partie de rétention par rapport à la pièce intermédiaire dans un second sens du troisième axe transversal, le second sens étant opposé au premier sens. La première partie de rétention et la seconde partie de rétention peuvent être en appui dans la direction du cinquième axe transversal respectivement sur une face du premier flasque et une face du second flasque qui sont opposées l'une de l'autre selon la direction du cinquième axe transversal. La seconde partie de rétention peut être élastiquement déformable de sorte à pouvoir être insérée dans le troisième trou de chaque flasque, et pour coopérer par retour élastique avec la face d'appui du second flasque.

La pièce de liaison peut comprendre une partie tubulaire au travers de laquelle le second arbre s'étend libre en rotation autour du cinquième axe transversal.

Le corps de l'organe d'appui peut former au niveau d'une face arrière un renfoncement dans lequel est, en tout ou partie, reçu la pièce intermédiaire, ladite au moins une première bielle et l'actionneur. Le dispositif de réglage de haut de dossier présente avantageusement un faible encombrement.

Selon un autre aspect, il est proposé un siège de véhicule comprenant une assise avec une armature d'assise, et un dossier tel que décrit ci-avant, l'armature de dossier étant fixée à l'armature d'assise, l'armature de dossier étant de préférence montée pivotante autour d'un septième axe transversal par rapport à l'armature d'assise.

Le siège de véhicule peut comprendre un appui-tête. Le corps de l'organe d'appui peut être adapté à recevoir des broches de l'appui-tête, de préférence de manière à pouvoir régler la position en hauteur par rapport à l'organe d'appui.

L'expression « articulé pivotant par rapport à » peut être formulée de manière équivalente à « monté pivotant sur » ou encore « directement relié à de manière pivotant ». L'expression « articulé pivotant par rapport à » peut signifier une articulation pivot entre deux éléments, notamment par l'intermédiaire d'un axe de pivot (physique ou tangible, autrement dit un arbre de pivot) qui s'étend selon l'axe d'articulation pivotante. En l'occurrence, il peut être prévu un axe de pivot selon l'un quelconque ou plusieurs, voire tous, parmi le premier axe transversal, le deuxième axe transversal, le troisième axe transversal, le quatrième axe transversal et le cinquième axe transversal. On rappel en outre qu'une articulation pivot entre deux éléments est une liaison entre deux éléments qui ne permet qu'un seul degré de liberté en rotation entre les deux éléments autour de l'axe d'articulation pivotante (dans le cas présent le premier axe transversal, le deuxième axe transversal, le troisième axe transversal, le quatrième axe transversal et le cinquième axe transversal). Consécutivement, toute rotation autour d'un autre axe que l'axe d'articulation pivotante et toute translation sont bloquées.

### Brève description des dessins

D'autres caractéristiques, détails et avantages apparaîtront à la lecture de la description détaillée ci-après, et à l'analyse des dessins annexés, sur lesquels :
Figure 1 représente schématiquement un dossier pour siège de véhicule comprenant un dispositif de réglage de haut de dossier selon l'état de la technique ;
Figure 2 comporte les figures 2a et 2b qui représentent schématiquement la cinématique du dispositif de réglage de haut de dossier du dossier de la figure 1, respectivement dans une position reculée et une position avancée ;
Figure 3 représente schématiquement une vue de côté d'un siège de véhicule selon la présente description ;
Figure 4 comporte les figures 4a et 4b qui représentent une vue partielle en coupe d'un dossier du siège de la figure 3, avec un dispositif de réglage de haut de dossier dans une position reculée à la figure 4a et dans une position avancée à la figure 4b ;
Figure 5 représente une vue partielle arrière du dossier de la figure 4 dans lequel la traverse a été retirée ;
Figure 6 représente une vue partielle en perspective du dossier de la figure 4 dans lequel la traverse a été retirée et dans lequel le dispositif de réglage de haut de dossier est dans la position reculée ;
Figure 7 représente une vue partielle en perspective du dossier de la figure 4 dans lequel la traverse a été retirée et dans lequel le dispositif de réglage de haut de dossier est dans la position avancée ;
Figure 8 comporte les figures 8a à 8c qui représentent respectivement une pièce intermédiaire, un premier arbre et un deuxième arbre relié à une pièce de liaison, chacun appartenant au dispositif de réglage de haut de dossier du dossier de la figure 4 ;

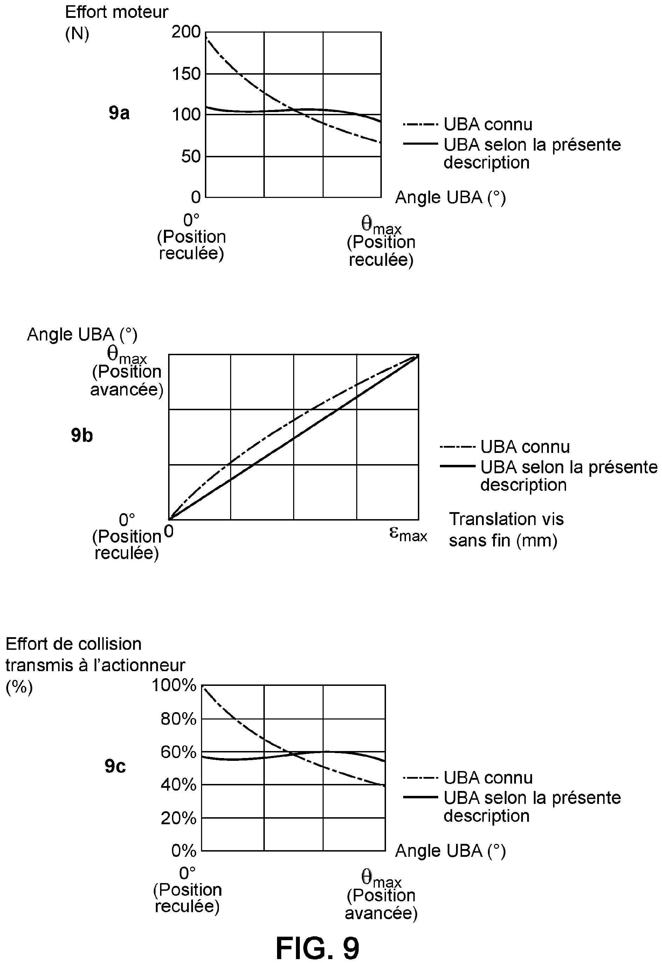

Figure 9 comporte les figures 9a à 9c : la figure 9a est un graphique comparant le dispositif de réglage de haut de dossier de l'art antérieur (appelé UBA connu) et selon la présente description (appelé UBA selon la présente description) en termes d'effort d'actionneur ; la figure 9b est un graphique comparant le dispositif de réglage de haut de dossier de l'art antérieur et selon la présente description en termes de paramètres cinématiques ; la figure 9c est un graphique comparant le dispositif de réglage de haut de dossier de l'art antérieur et selon la présente description par rapport à la résistance suite à une collision.

### Description des modes de réalisation

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontal », « vertical », etc., il est fait référence, sauf précision contraire, à l'orientation des figures ou d'un siège dans sa position normale d'utilisation.

Dans la suite, la direction longitudinale X s'entend de la direction longitudinale du siège. La direction longitudinale X du siège est considérée être la même que la direction longitudinale du véhicule automobile dans lequel le siège est monté. Cette direction longitudinale X correspond à la direction normale d'avancement du véhicule. La direction longitudinale X est de préférence horizontale. La direction transversale Y est la direction transversale du siège. La direction transversale du siège correspond ainsi à la direction transversale ou latérale du véhicule automobile. Cette direction transversale correspond à une direction perpendiculaire à la direction normale d'avancement du véhicule. La direction transversale Y est de préférence horizontale. Enfin, la direction verticale Z est une direction verticale du siège, perpendiculaire aux directions longitudinale X et transversale Y.

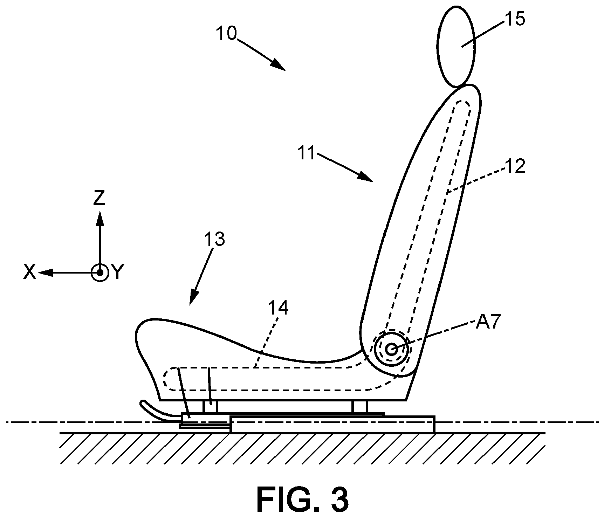

La figure 3 représente de façon schématique un siège 10 de véhicule automobile. Celui est ici monté sur un mécanisme à glissières permettant de coulisser le siège 10 dans la direction longitudinale X.

Le siège 10 comporte une assise 13 avec une armature d'assise 14. Le siège 10 comprend également un dossier 11 avec une armature de dossier 12. L'armature de dossier 12 est montée sur l'armature d'assise 14, pivotante autour d'un axe transversal d'articulation A7 (nommé aussi septième axe transversal A7 dans la présente description en référence aux autres axes transversaux décrits ci-après), par au moins un mécanisme d'articulation. De tels mécanismes d'articulation sont connus. Par conséquent, ces mécanismes d'articulation ne sont pas décrits plus en détail ici. Le siège 10 comprend également un appui-tête 15.

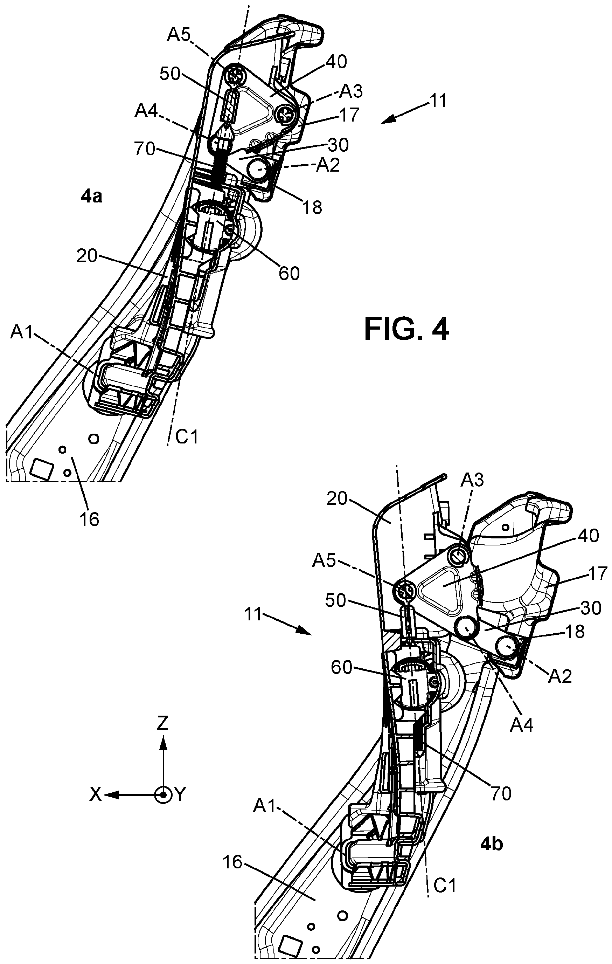

Dans la suite, on décrit de manière plus détaillée le dossier 11 de siège 10 en référence aux figures 4 à 9. Ici le dossier 11 comprend un dispositif de réglage de haut de dossier (communément appelé sous l'acronyme UBA pour « Upper Backrest Adjustment » en anglais).

L'armature de dossier 12 comprend un premier montant 16 et un deuxième montant 16'. Dans l'exemple illustré, l'armature de dossier 12 comprend en outre une traverse 17. La traverse 17 est ici une traverse 17 haute. En effet, la traverse 17 est fixée sur des portions d'extrémité haute du premier montant 16 et du deuxième montant 16' de l'armature de dossier 12. Les extrémités hautes du premier montant 16 et du deuxième montant 16', sont par exemple les extrémités des premier et deuxième montants 16, 16', opposées à leur extrémité respective, destinée à recevoir un mécanisme d'articulation.

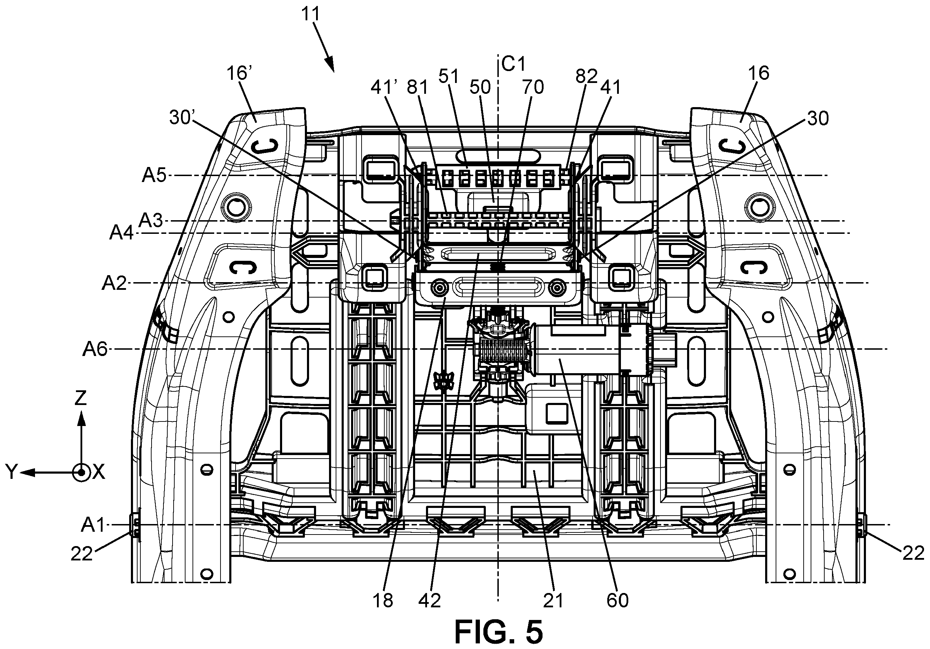

Le dispositif de réglage de haut de dossier comporte tout d'abord un organe d'appui 20. L'organe d'appui 20 comporte un corps 21 destiné à recevoir en appui sur une face avant le haut du dos d'un occupant du siège 10 notamment avec les épaules et/ou les omoplates de l'occupant. Le corps 21 de l'organe d'appui 20 peut être destiné à être en contact, éventuellement par l'intermédiaire d'une garniture et/ou d'une housse recouvrant au moins partiellement celui-ci. Le corps 21 présente une face avant, destinée à être orientée en direction du haut du dos d'un occupant du siège 10. La face avant peut être plane ou concave. Le corps 21 comprend également une face arrière opposée à la face avant. La face arrière comprend ici des nervures de renfort visibles aux figures 5 à 7, celles-ci formant des alvéoles. Le corps 21 de l'organe d'appui 20 est situé en vis-à-vis dans la direction longitudinale X et à l'avant de la traverse 17. Enfin, le corps 21 de l'organe d'appui 20 peut être adapté à recevoir des broches de l'appui-tête 15, de préférence de manière à pouvoir régler la position en hauteur par rapport à l'organe d'appui 20.

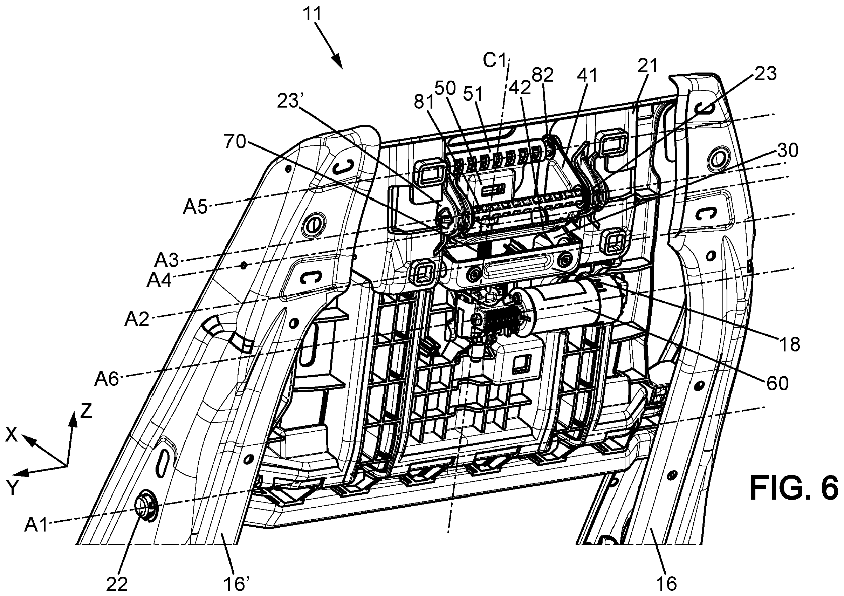

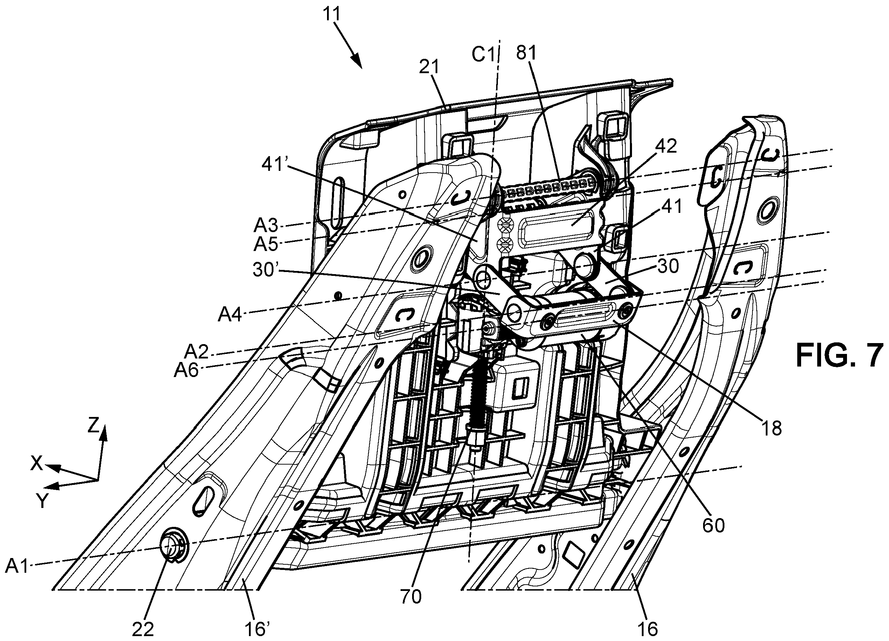

L'organe d'appui 20 est monté pivotant autour d'un premier axe transversal A1 sur l'armature de dossier 12. En particulier, l'organe d'appui 20 est mobile autour du premier axe transversal A1 entre une position reculée représentée aux figures 4a et 6 et une position avancée représentée aux figures 4b et 7. La rotation de l'organe d'appui 20 autour du premier axe transversal A1 entre la position reculée et la position avancée peut correspondre à une rotation d'un angle θmax égal à 15° de l'organe d'appui 20 autour du premier axe transversal A1. L'organe d'appui 20 est déplacé dans la position avancée après une rotation vers l'avant depuis la position reculée. En d'autres termes, l'organe d'appui 20 est davantage écarté de la traverse 17 dans la position avancée que dans la position reculée. La position avancée peut permettre d'assurer un appui entre le haut du dos d'un occupant du siège 10 et l'organe d'appui 20, améliorant ainsi le confort de l'occupant.

Pour permettre la rotation de l'organe d'appui 20 autour du premier axe transversal A1, l'organe d'appui 20 et les montants 16, 16' de l'armature de dossier 12 peuvent comprendre des reliefs associés, notamment par complémentarité de forme, pour guider 18 l'organe d'appui 20 en rotation autour du premier axe transversal A1, par rapport aux premier montant 16 et deuxième montant 16' de l'armature de dossier 12. Les reliefs 22 de l'organe d'appui 20 sont ici saillants transversalement du corps 21 de l'organe d'appui 20. Les reliefs 22 de l'organe d'appui 20 s'étendent depuis des faces latérales du corps 21 de l'organe d'appui 20 et sont chacun reçus respectivement dans un logement du premier montant 16 et un logement du deuxième montant 16' de l'armature de dossier 12.

Le dispositif de réglage de haut de dossier comprend une première bielle 30 et une seconde bielle 30'. La première bielle 30 et la seconde bielle 30' sont chacune articulées pivotantes par rapport à l'armature de dossier 12 autour d'un deuxième axe transversal A2. La première bielle 30 et la seconde bielle 30' comprennent chacune une première extrémité et une seconde extrémité. La première bielle 30 et la seconde bielle 30' sont chacune articulées pivotantes par rapport à l'armature de dossier 12 au niveau de leur première extrémité. En particulier, la première bielle 30 et la seconde bielle 30' peuvent chacune être articulées pivotantes par rapport une branche respective d'un guide 18 en U qui est solidaire de la traverse 17.

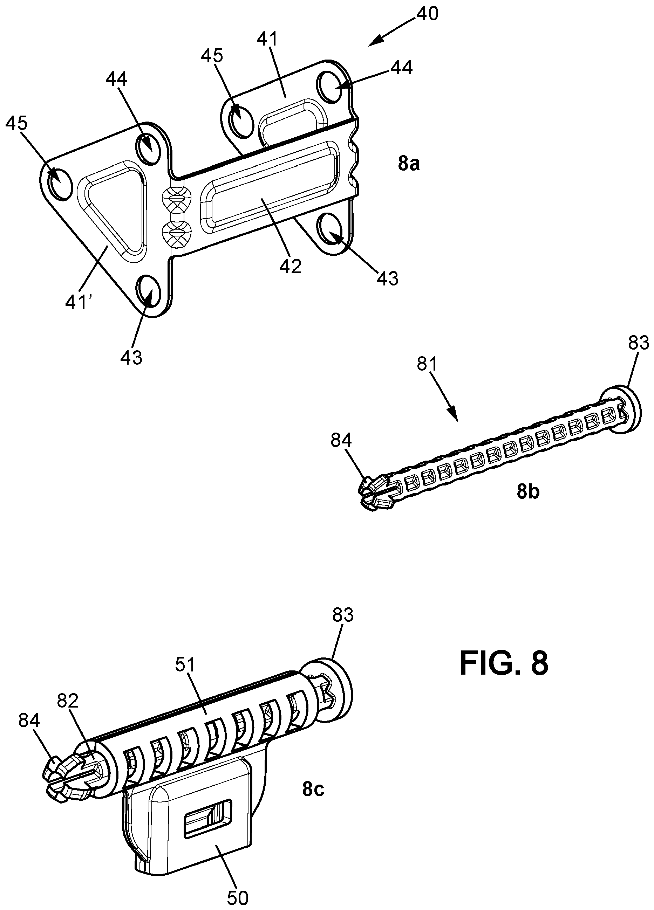

Le dispositif de réglage de haut de dossier comprend une pièce intermédiaire 40 entre l'organe d'appui 20 et chacune de la première bielle 30 et seconde bielle 30'. La pièce intermédiaire 40 comprend un premier flasque 41 et un second flasque 41' écartés l'un de l'autre dans la direction transversale Y. Le premier flasque 41 et le second flasque 41' s'étendent chacun perpendiculairement à la direction transversale Y. La pièce intermédiaire 40 comprend en outre un longeron 42 qui s'étend transversalement et qui relie le premier flasque 41 et le second flasque 41' l'un à l'autre. Le longeron 42 permet de maintenir l'écartement dans la direction transversale Y entre le premier flasque 41 et le second flasque 41'. Plus particulièrement visibles à la figure 8a, le premier flasque 41 et le second flasque 41' comprennent chacun un premier trou 43, un deuxième trou 44 et un troisième trou 45 dont le positionnement et la fonction sont décrits plus en détail ci-après.

La pièce intermédiaire 40 est d'abord articulée pivotante par rapport à l'organe d'appui 20 autour d'un troisième axe transversal A3. À cet effet, le dispositif de réglage de haut de dossier comprend un premier arbre 81 qui s'étend selon le troisième axe transversal A3. Le premier arbre 81 est solidaire de l'organe d'appui 20 et la pièce intermédiaire 40 est montée pivotante sur le premier arbre 81. À cet effet, le deuxième trou 44 du premier flasque 41 et du second flasque 41' sont chacun centrés sur le troisième axe transversal A3 et le premier arbre 81 s'étend au travers du deuxième trou 44 de chacun du premier flasque 41 et du second flasque 41'.

L'organe d'appui 20 comprend ici une première patte 23 et une seconde patte 23' s'étendant chacune depuis la face arrière du corps 21. Le premier arbre 81 s'étend transversalement depuis la première patte 23 jusqu'à la seconde patte 23'. La première patte 23 et la seconde patte 23' peuvent chacune comprendre un trou centré sur le troisième axe transversal A3 à travers duquel s'étend le premier arbre 81. Plus particulièrement visible à la figure 8b, le premier arbre 81 comprend une première partie de rétention 83 par rapport à l'organe d'appui 20 dans un premier sens du troisième axe transversal A3 et une seconde partie de rétention 84 par rapport à l'organe d'appui 20 dans un second sens du troisième axe transversal A3, le second sens étant opposé au premier sens. La première partie de rétention 83 et la seconde partie de rétention 84 sont en appui dans la direction du troisième axe transversal A3 respectivement sur une face de la première patte 23 et une face de la seconde patte 23' qui sont opposées l'une de l'autre selon la direction du troisième axe transversal A3. La seconde partie de rétention 84 est élastiquement déformable de sorte à pouvoir être insérée dans le trou de chacune des pattes 23, 23' et le deuxième trou 44 de chaque flasque, et pour coopérer par retour élastique avec la face d'appui de la seconde patte 23'.

La pièce intermédiaire 40 est aussi articulée pivotante par rapport à la première bielle 30 et la seconde bielle 30' autour d'un quatrième axe transversal A4. En particulier, le premier flasque 41 est articulé pivotant par rapport à la première bielle 30 autour du quatrième axe transversal A4 et le second flasque 41' est articulé pivotant par rapport à la seconde bielle 30' autour du quatrième axe transversal A4. La première bielle 30 et la seconde bielle 30' sont chacune articulées pivotantes respectivement par rapport au premier flasque 41 et au second flasque 41' au niveau de leur seconde extrémité. À cet effet, le premier trou 43 de chacun du premier flasque 41 et du second flasque 41' est centré sur le quatrième axe transversal A4 et un organe de pivot s'étend au travers du premier trou 43 de chaque flasque. De manière avantageuse, l'agencement des deux bielles 30, 30' permet de renforcer la structure du dispositif de réglage de haut de dossier en cas de collision du véhicule, notamment cela permet d'éviter un vrillage du dispositif de réglage de haut de dossier.

Le dispositif de réglage de haut de dossier comprend enfin un actionneur qui permet de régler la position de l'organe d'appui 20 autour du premier axe transversal A1 entre une position reculée et une position avancée.

L'actionneur comprend tout d'abord une pièce de liaison 50 articulée pivotante par rapport à la pièce intermédiaire 40 autour d'un cinquième axe transversal A5. Pour ce faire, le dispositif de réglage de haut de dossier comprend un second arbre 82 qui s'étend selon le cinquième axe transversal A5. Le second arbre 82 est solidaire de la pièce intermédiaire 40 et la pièce de liaison 50 est montée pivotante sur le second arbre 82. Le troisième trou 45 de chacun du premier flasque 41 et du second flasque 41' est centré sur le cinquième axe transversal A5 et le second arbre 82 s'étend au travers du troisième de chacun du premier flasque 41 et du second flasque 41'. La pièce de liaison 50 comprend une partie tubulaire 51 d'axe le cinquième axe transversal A5 et au travers de laquelle le second arbre 82 s'étend libre en rotation autour du cinquième axe transversal A5.

Le second arbre 82 est de forme semblable au premier arbre 81. Ainsi, comme plus particulièrement visible à la figure 8c, le second arbre 82 comprend une première partie de rétention 83 par rapport à la pièce intermédiaire 40 dans un premier sens du cinquième axe transversal A5 et une seconde partie de rétention 84 par rapport à la pièce intermédiaire 40 dans un second sens du troisième axe transversal A3, le second sens étant opposé au premier sens. La première partie de rétention 83 et la seconde partie de rétention 84 sont en appui dans la direction du cinquième axe transversal A5 respectivement sur une face du premier flasque 41 et une face du second flasque 41' qui sont opposées l'une de l'autre selon la direction du cinquième axe transversal A5. La seconde partie de rétention 84 du second arbre 81 est élastiquement déformable de sorte à pouvoir être insérée dans le troisième trou de chaque flasque 41, 41' , et pour coopérer par retour élastique avec la face d'appui du second flasque 41'.

De manière remarquable, le premier flasque 41 et le second flasque 41' ont chacun une forme sensiblement triangulaire dont les sommets sont respectivement au voisinage du troisième axe transversal A3, du quatrième axe transversal A4 et du cinquième axe transversal A5.

L'actionneur est par ailleurs adapté pour déplacer la pièce de liaison 50 en translation selon un premier axe perpendiculaire C1 à la direction transversale Y. L'actionneur comprend ici un moteur 60 et une vis sans fin 70 s'étendant selon le premier axe perpendiculaire C1 à la direction transversale Y. La pièce de liaison 50 est solidaire, par exemple par encastrement, d'une extrémité de la vis sans fin 70. Le moteur 60 est adapté pour déplacer la vis sans fin 70 en translation selon la direction du premier axe perpendiculaire C1 à la direction transversale Y. Par exemple, le moteur 60 peut déplacer la vis sans fin 70 en translation selon le premier axe perpendiculaire C1 à l'axe transversal au moyen d'un engrenage. De tels moyens d'entrainement de la vis sans fin 70 par le moteur 60 sont connus et ne sont donc pas décrits plus en détail.

Comme visible aux figures 6 et 7, le corps 21 de l'organe d'appui 20 forme au niveau de la face arrière un renfoncement dans lequel est, en partie, reçu la pièce intermédiaire 40, ladite au moins une première bielle 30 et l'actionneur quelle que soit la position angulaire de l'organe d'appui 20 autour du premier axe. Le dispositif de réglage de haut de dossier présente ainsi avantageusement un faible encombrement.

Il est maintenant fait référence à la figure 9a qui représente un graphique illustrant la variation de l'effort requis par l'actionneur pour pivoter l'organe d'appui 20 vers l'avant en fonction de la position angulaire de l'organe d'appui 20 entre la position reculée et la position avancée, pour un dispositif de réglage de haut de dossier de l'état de la technique et selon la présente description. Le dispositif de réglage de haut de dossier présente avantageusement une cinématique qui permet de réduire la variation de l'effort requis par l'actionneur lors de la rotation vers l'avant de l'organe d'appui 20 autour du premier axe transversal A1 entre la position reculée et la position avancée. En particulier, la variation relative maximale observée de l'effort requis par l'actionneur pour entrainer l'organe d'appui 20 en rotation autour du premier axe transversal A1 vers l'avant est inférieure à 20%.

Par ailleurs, la cinématique du dispositif de réglage de haut de dossier permet une réduction de l'effort requis par l'actionneur pour entrainer l'organe d'appui 20 autour du premier axe transversal A1 vers l'avant lorsque celui-ci est au voisinage de la position reculée par rapport aux dispositifs de réglage de haut de dossier connus. Ainsi, le moteur 60 peut présenter des dimensions réduites permettant son intégration dans le dossier 11 tout en limitant, voire en évitant, que celui-ci soit soumis à une charge excessive. Cela permet de préserver le moteur 60 d'une usure prématurée et de conserver un dispositif de réglage de haut de dossier compact.

Il est maintenant fait référence à la figure 9b qui représente un graphique illustrant la variation de la position angulaire de l'organe d'appui 20 entre la position reculée et la position avancée en fonction du déplacement en translation de la vis sans fin 70, pour un dispositif de réglage de haut de dossier de l'état de la technique et selon la présente description. Il peut être constaté que, contrairement au dispositif de l'art antérieur, le dispositif de réglage de haut de dossier selon la présente description permet une relation linéaire entre la translation de la vis sans fin 70 selon la direction du premier axe perpendiculaire C1 et la rotation de l'organe d'appui 20 autour du premier axe transversal A1. Le réglage de la position de l'organe d'appui 20 autour du premier axe transversal A1 est ainsi plus aisé et plus confortable pour un occupant assis sur le siège 10.

Par ailleurs, le moteur 60 et la vis sans fin 70 sont articulés pivotant par rapport à l'organe d'appui 20 autour d'un sixième axe transversal A6. Cela permet de réduire les contraintes d'isostatisme du dispositif de réglage de haut de dossier. Ainsi, le dispositif de réglage de haut de dossier est avantageusement isostatique ce qui facilite son assemblage et réduit, voir supprime, les risques de fléchissement de la vis sans fin 70 en cas de collision du véhicule. Le débattement angulaire autour du sixième axe transversal A6 du moteur 60 et la vis sans fin 70 par rapport à l'organe d'appui 20 peut être inférieur ou égal à 4°.

La figure 9c représente un graphique illustrant la variation de l'effort transmis à l'actionneur en cas de collision du véhicule en fonction de la position angulaire de l'organe d'appui 20 entre la position reculée et la position avancée, pour un dispositif de réglage de haut de dossier de l'état de la technique et selon la présente description. Le graphique de la figure 9c correspond en l'occurrence à une collision arrière au véhicule de l'ordre 32 G. La cinématique du dispositif de réglage de haut de dossier selon la présente description permet tout d'abord une réduction de l'effort maximal transmis à la cinématique et à l'actionneur lors d'une collision (i.e. lorsque l'organe d'appui 20 est en position reculée). En particulier, il a été mesuré une réduction de l'ordre 40% de l'effort transmis à la cinématique et à l'actionneur lors d'une collision lorsque l'organe d'appui 20 est dans la position reculée. La cinématique du dispositif de réglage de haut de dossier permet en outre une réduction de la variation relative de l'effort transmis à l'actionneur lors d'une collision sur la plage angulaire de rotation de l'organe d'appui 20 autour du premier axe transversal A1.

De manière remarquable à la figure 4b, le deuxième axe transversal A2, le quatrième axe transversal A4 et le cinquième axe transversal A5 sont sensiblement alignés lorsque l'organe d'appui 20 est dans la position avancée ou au voisinage de la position avancée. Ainsi, lorsqu'un occupant a le haut du dos en appui sur le corps 21 de l'organe d'appui 20, l'effort induit sur l'organe d'appui 20 est transmis à la première bielle 30 et ensuite à l'armature de dossier 12 au lieu d'être transmis à l'actionneur, ce qui préserve l'actionneur d'une usure prématurée.

La désignation numérique (premier, deuxième, troisième, etc.) des axes transversaux ne résulte que d'un choix de rédaction. Ainsi, la désignation numérique des axes transversaux peut être intervertie dans n'importe quel ordre.

L'invention ne se limite pas aux seuls exemples décrits précédemment et est susceptible de nombreuse variante. Aussi, selon une variante non représentée, la pièce de liaison 50 peut être solidaire d'une tige déplacée en translation selon le premier axe perpendiculaire C1 à la direction transversale par un vérin hydraulique, pneumatique ou électrique par exemple.

## Revendications

1. Dossier (11) pour siège (10) de véhicule, le dossier (11) comprenant une armature de dossier (12) et un dispositif de réglage de haut de dossier, le dispositif de réglage de haut de dossier comprenant :
- un organe d'appui (20) comportant un corps (21) destiné à recevoir en appui sur une face avant le haut du dos d'un occupant du siège, l'organe d'appui (20) étant monté pivotant autour d'un premier axe transversal (A1) sur l'armature de dossier (12) ;
- au moins une première bielle (30) articulée pivotante par rapport à l'armature de dossier (11) autour d'un deuxième axe transversal (A2) ;
- une pièce intermédiaire (40) entre l'organe d'appui (20) et la première bielle (30), la pièce intermédiaire (40) étant articulée pivotante par rapport à l'organe d'appui (20) autour d'un troisième axe transversal (A3) et par rapport à la première bielle (30) autour d'un quatrième axe transversal (A4),
- un actionneur pour régler la position de l'organe d'appui (20) autour du premier axe transversal (A1) entre une position reculée et une position avancée, l'actionneur comprenant une pièce de liaison (50) articulée pivotante par rapport à la pièce intermédiaire (40) autour d'un cinquième axe transversal (A5), l'actionneur étant adapté pour déplacer la pièce de liaison (50) en translation selon un premier axe perpendiculaire (C1) à la direction transversale (Y).

2. Dossier (11) selon la revendication précédente, dans lequel l'actionneur comprend un moteur (60) et une vis sans fin (70) s'étendant selon le premier axe perpendiculaire (C1) à la direction transversale (Y), la pièce de liaison (50) étant solidaire d'une extrémité de la vis sans fin (70), le moteur (60) étant adapté pour déplacer la vis sans fin (70) en translation selon la direction du premier axe perpendiculaire (C1) à la direction transversale (Y).

3. Dossier (11) selon la revendication précédente, dans lequel le moteur (60) et la vis sans fin (70) sont articulés pivotant par rapport à l'organe d'appui (20) autour d'un sixième axe transversal (A6).

4. Dossier (11) selon l'une quelconque des revendications précédentes, dans lequel le deuxième axe transversal (A2), le quatrième axe transversal (A4) et le cinquième axe transversal (A5) sont sensiblement alignés lorsque l'organe d'appui (20) est dans la position avancée ou au voisinage de la position avancée.

5. Dossier (11) selon l'une quelconque des revendications précédentes, dans lequel le dispositif de réglage de haut de dossier comprend une seconde bielle (30') articulée pivotante par rapport à l'armature de dossier (12) autour du deuxième axe transversal (A2), et dans lequel la pièce intermédiaire (40) comprend un premier flasque (41) et un second flasque (41') écartés l'un de l'autre dans la direction transversale (Y), le premier flasque (41) étant articulé pivotant par rapport à la première bielle (30) autour du quatrième axe transversal (A4) et le second flasque (41') étant articulé pivotant par rapport à la seconde bielle (30') autour du quatrième axe transversal (a4).

6. Dossier (11) selon l'une quelconque la revendication 5, dans lequel le premier flasque (41) et le second flasque (41') s'étendent chacun perpendiculairement à la direction transversale (Y), le premier flasque (41) et le second flasque (41') ayant chacun une forme sensiblement triangulaire dont les sommets sont respectivement au voisinage du troisième axe transversal (A3), du quatrième axe transversal (A4) et du cinquième axe transversal (A5).

7. Dossier (11) selon l'une quelconque des revendications précédentes, dans lequel le dispositif de réglage de haut de dossier comprend un premier arbre (81) s'étendant selon le troisième axe transversal (A3), le premier arbre (81) étant solidaire de l'organe d'appui (20), la pièce intermédiaire (40) étant montée pivotante sur le premier arbre (81).

8. Dossier (11) selon l'une quelconque des revendications précédentes, dans lequel le dispositif de réglage de haut de dossier comprend un second arbre (82) s'étendant selon le cinquième axe transversal (A5), le second arbre (82) étant solidaire de la pièce intermédiaire (40), la pièce de liaison (50) étant montée pivotante sur le second arbre (82).

9. Dossier (11) selon l'une quelconque des revendications précédentes, dans lequel le corps (21) de l'organe d'appui (20) forme au niveau d'une face arrière un renfoncement dans lequel est, en tout ou partie, reçu la pièce intermédiaire (40), ladite au moins une première bielle (30) et l'actionneur.

10. Siège (10) de véhicule comprenant une assise (13) avec une armature d'assise (14), et un dossier (11) selon l'une quelconque des revendications précédentes, l'armature de dossier (12) étant fixée à l'armature d'assise (14), l'armature de dossier (11) étant de préférence montée pivotante autour d'un septième axe transversal (A7) par rapport à l'armature d'assise (14).
